# FASCICULE DE BREVET EUROPEEN

(11) **EP 1 462 019 B1**
(45) Date de publication et mention de la délivrance du brevet: **28.06.2006**
(21) Numéro de dépôt: 04006178.0
(22) Date de dépôt: 16.03.2004
(51) Int. Cl.: A43B 5/04, A43B 7/14, A43B 5/16, B29D 31/505

(54) **Chaussure de sport pour la planche de glisse**
Sportschuh für Gleitbrett
Sport shoe for gliding board

(30) Priorité: 24.03.2003 CH 4982003
(43) Date de publication de la demande: 29.09.2004
(73) Titulaire: LANGE INTERNATIONAL S.A., 1700 Fribourg (CH)
(72) Inventeur: Cagliari, Peter, 31044 Montebelluna (TV) (IT); Fregoni, Andrea, 31038 Paese (TV) (IT)
(74) Mandataire: Bugnion Genève

(56) Documents cités:
- EP-A- 0 808 708
- EP-A- 0 903 087
- WO-A-02/087371
- FR-A- 2 766 065
- US-A- 5 667 737
- US-A1- 2001 018 805

## Description

L'invention concerne une chaussure de sport, en particulier pour planche de glisse telle que ski, surf, ou chaussure de patinage, ayant une première partie en une première matière et une deuxième partie superposée à ladite première partie et en une deuxième matière et, d'autre part, de moyens de renforcement.

Une telle chaussure est décrite par le brevet US5 667 737.

Une telle chaussure est aussi connue de la demande de brevet EP 0 903 087. Dans cette demande antérieure, l'invention avait pour but d'améliorer une chaussure à âme rigide directement en contact avec un chausson de confort en ce qui concerne la transmission des efforts entre le pied et, en particulier, le ski et la précision du guidage du ski. Cette amélioration était apportée par des renforts formés notamment par une surépaisseur de l'âme rigide, renforts placés aux endroits de la chaussure transmettant des efforts importants. Ces renforts forment une structure générale en hauban améliorant l'appui arrière et la transmission des efforts latéraux.

On connaît, par ailleurs, des chaussure de ski comprenant une âme intérieure rigide entourée d'une partie extérieure souple. Dans le cas du brevet FR 2 119 653, la partie extérieure souple, résistant à l'usure et à l'abrasion, est destinée à protéger la partie intérieure de la chaussure. Dans le cas de la chaussure selon le brevet US 5 588 228, l'âme intérieure rigide est découpée de manière à former une structure rigide triangulée présentant la forme générale d'un « Y » inversé.

La présente invention a pour but de réduire le poids et l'épaisseur des zones renforcées sans réduire la rigidité de ces zones.

La chaussure de sport selon l'invention est caractérisée en ce que les moyens de renforcement sont au moins en partie constitués d'au moins une armature en matière synthétique armée de fibres minérales ou synthétiques.

Les fibres sont, par exemple, des fibres de carbone, de verre ou de KEVLAR (marque déposée), de préférence tissées. Ces fibres sont noyées dans une matière synthétique thermodurcissable ou thermoplastique, de préférence en même rnlyuréthane que le polyuréthane constituant l'âme rigide, de telle sorte qu'une parfaite adhérence est assurée entre l'âme rigide et les renforts.

L'armature est, de préférence, constituée d'une bande fabriquée à plat, puis thermoformée pour lui donner la forme désirée. Cette bande préformée est, de préférence, disposée à l'extérieur de l'âme rigide et en dessous de l'âme souple.

L'armature peut être recouverte ou non par l'enveloppe de matière souple. Elle est, de préférence, recouverte si elle est peu résistante à l'abrasion ou placée dans des zones pouvant être agressées.

Le dessin annexé représente, à titre d'exemple, un mode d'exécution d'une chaussure selon l'invention.
La figure 1 est une vue de côté d'une âme rigide d'une partie de chaussure de ski.
La figure 2 est une vue en perspective de l'armature diagonale équipant l'âme rigide de la figure 1.
La figure 3 représente l'âme rigide de la figure 1 munie de son enveloppe en matière souple.

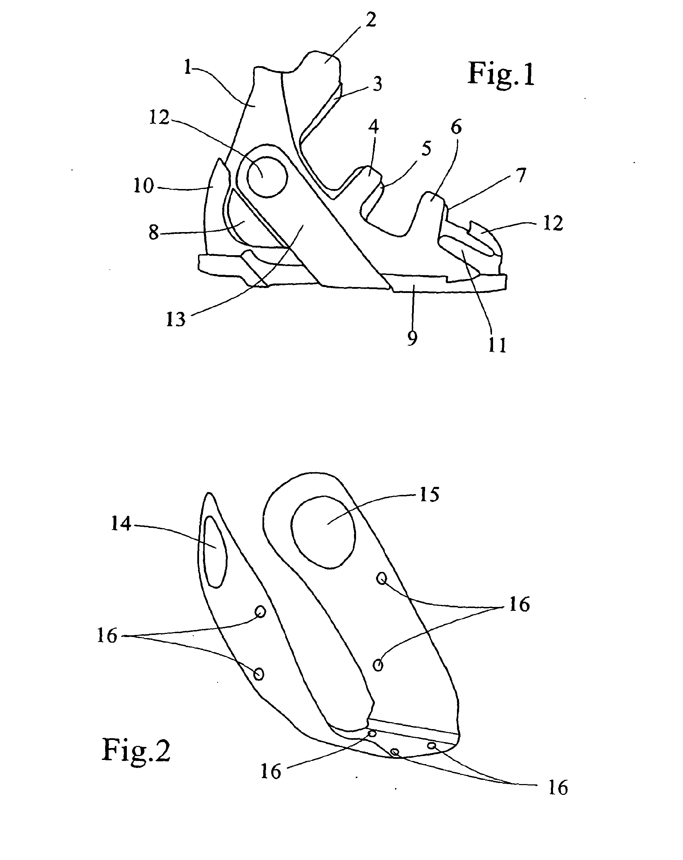

L'âme rigide 1 représentée à la figure 1 est, de préférence, en polyuréthane. Elle se présente sous la forme d'une coque découpée et ajourée. Elle est ouverte sur le dessus de manière à présenter deux rabats 2 et 3 dans sa partie supérieure, une paire de languettes 4, 5 dans la zone inférieure du cou de pied et une paire de languettes 6, 7 dans la zone de l'avant-pied. Ces languettes sont destinées à recevoir des moyens de fermeture et de serrage de la chaussure tels que des boucles. L'âme rigide 1 présente en outre deux ajours latéraux 8 s'étendant en arrière et en dessous de la zone malléolaire du pied. L'âme rigide 1 comprend en outre une semelle 9 formant la plus grande partie de la semelle de la chaussure, un renfort arrière 10 s'élevant à partir de la zone du talon, un renfort 11 formé à l'avant, du côté extérieur de la chaussure et un renfort 12 formé sur l'extrémité avant de l'âme rigide. Les renforts 10, 11 et 12 sont formés par des surépaisseurs de la matière de l'âme rigide, comme dans le cas de la chaussure selon EP 0 903 087. Le renfort 11 sert avant tout de déflecteur de piquet lors des compétitions de slalom. L'âme rigide 1 présente encore, de chaque côté de la zone malléolaire, des surépaisseurs 12 cylindriques entourées par les extrémités d'une armature 13 formée d'une bande rigide de matière synthétique armée de fibres minérales ou synthétiques, de préférence des fibres de carbone, de verre ou de KEVLAR (marque déposée) tissées et noyées dans une matrice en polyuréthane compatible avec le polyuréthane de l'âme rigide.

Cette armature 13 est représentée à la figure 2 avant son association avec l'âme rigide. Elle est formée par thermoformage de la matrice armée. L'armature 13 est disposée ensuite dans le moule de l'âme rigide 1 avant le moulage de cette âme par injection. Afin d'assurer une parfaite liaison de l'âme rigide 1 avec l'armature 13, liaison déjà assurée par la compatibilité des matériaux, l'armature 13 présente en outre deux découpes circulaires 14 et 15 à ses extrémités, ainsi que des trous 16 dans lesquels le polyuréthane injecté pour constituer l'âme rigide pénètre de manière à assurer en plus un ancrage mécanique. Les saillies 12 de l'âme rigide sont donc formées par la présence des découpes 14 et 15. Les surépaisseurs formées par les saillies 12 ont pour principale fonction de supporter un collier comme ceci sera décrit plus loin.

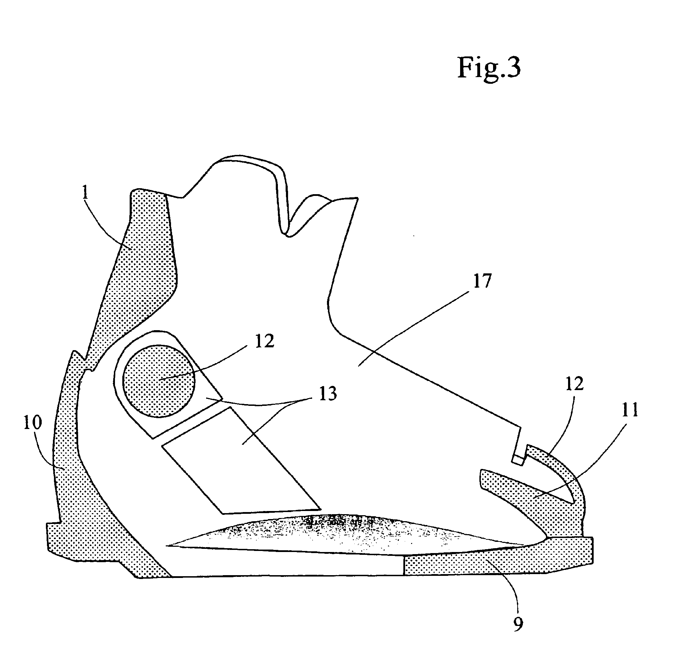

L'âme rigide, munie de son armature 13, est ensuite revêtue d'une enveloppe souple 17 (figure 3) également en polyuréthane. L'âme rigide 1 n'est pas entièrement recouverte par l'enveloppe souple 17. Les zones non recouvertes sont hachurées à la figure 3. En particulier, les surépaisseurs 10, 11 et 12, ainsi que les parties avant et arrière de la semelle 9 ne sont pas recouvertes. Il en est de même des parties en fibres dans la zone de l'armature 13 qui ne sont pas non plus recouvertes.

Le polyuréthane de l'âme rigide 1 présente par exemple une dureté de 64 shD et l'enveloppe 17 une dureté de 50 shD.

La partie de chaussure représentée à la figure 3 est complétée par un collier de cheville non représenté, articulé sur la partie représentée. Ce collier peut être fabriqué de la même manière que la partie de chaussure représentée qui constitue la coque. L'articulation s'effectue au moyen de rivets traversant les zones renforcées 12.

La partie de chaussure représentée n'est, bien entendu, qu'un exemple de réalisation. L'âme rigide ne doit pas nécessairement présenter des parties renforcées par des surépaisseurs. L'armature en matière synthétique armée des fibres pourrait être disposée différemment sur la partie rigide. Elle pourrait, par exemple, former un étrier passant au-dessus de la partie renforcée 10 et s'étendant obliquement vers l'avant de chaque côté en direction de la semelle.

## Revendications

1. Chaussure de sport pour planche de glisse, telle que ski, surf, ou chaussure de patinage, ayant, d'une part, une première partie (1) en une première matière plastique injectée et une deuxième partie (17) superposée à ladite première partie et en une deuxième matière plastique injectée et, d'autre part, de moyens de renforcement (10, 11, 12, 13), **caractérisée en ce que** les moyens de renforcement sont au moins en partie constitués d'au moins une armature (13) comprenant une matrice thermoplastique ou thermodurcissable en matière synthétique armée de fibres minérales ou synthétiques et positionnés au moins partiellement entre lesdites parties.

2. Chaussure selon la revendication 1, **caractérisée en ce que** la première partie est une âme rigide (1) comportant, d'une part, des moyens de renforcement et constituant, dans certaines zones, la face intérieure de la chaussure qui reçoit un chausson de confort et la deuxième partie est une enveloppe de matière souple (17) recouvrant au moins partiellement l'âme rigide (1) et constituant elle-même la face intérieure de la chaussure dans les zones où l'âme rigide est absente.

3. Chaussure selon la revendication 1 ou 2, **caractérisée en ce que** la matière synthétique de l'armature est thermoformable.

4. Chaussure selon l'une des revendications 1 à 3, **caractérisée en ce que** les fibres sont sous forme de nappes textiles.

5. Chaussure selon l'une des revendications précédentes, **caractérisée en ce que** les fibres sont du carbone, ou du KEVLAR (marque déposée), ou des fibres de verres.

6. Chaussure selon la revendication précédente, **caractérisée en ce que** l'armature est formée par la combinaison de plusieurs nappes textiles de fibres identiques ou différentes.

7. Chaussure selon la revendication 5 ou 6, **caractérisée en ce que** les fibres sont superposées ou tissées.

8. Chaussure selon l'une des revendications 1 à 7, **caractérisée en ce que** l'armature (13) est recouverte par l'enveloppe souple.

9. Chaussure selon l'une des revendications 1 à 8, **caractérisée en ce que** l'armature (13) n'est au moins pas en partie recouverte par l'enveloppe souple (17).

10. Chaussure selon l'une des revendications 1 à 9, **caractérisée en ce que** l'âme rigide (1) comprend une armature (13) s'étendant transversalement sous l'âme rigide, entre talon et pied et obliquement vers l'arrière, de chaque côté de l'âme rigide.

11. Chaussure selon l'une des revendications 1 à 10 **caractérisée en ce que** l'âme rigide (1) comprend une armature s'étendant au-dessus du talon et obliquement vers le bas et l'avant de chaque côté de l'âme rigide.

12. Procédé de fabrication d'une chaussure selon l'une des revendications précédentes, **caractérisé en ce que** l'on met en forme la matrice armée d'une armature (13), que l'on disposée ensuite cette armature (13) dans un premier moule, que l'on injecte la première matière sur l'armature (13), puis que l'on sur-injecte dans un deuxième moule la deuxième matière sur l'ensemble obtenu du premier moule.

## Claims

1. A sports boot for a board for gliding, such as a snow board, or skating boot, having, on the one hand, a first part (1) in a first injected plactic material and a second part (17) superposed on said first part and in a second plastic injected material, and, on the other hand, reinforcement means (10, 11, 12, 13), **characterized in that** the reinforcement means are at least partly formed by at least one frame (13) comprising a thermoplastic or heat-curable matrix in synthetic material reinforced with mineral or synthetic fibers and positioned at least partially between said parts.

2. The boot as claimed in claim 1, **characterized in that** the first part is a rigid core (1) including, on the one hand, reinforcement means and constituting, in certain zones, the inner face of the boot that receives a comfort liner, and the second part is an envelope (17) of flexible material covering at least partially the rigid core (1) and itself constituting the inner face of the boot in the zones where the rigid core is absent.

3. The boot as claimed in claim 1 or 2, **characterized in that** the synthetic material of the frame is heat-moldable.

4. The boot as claimed in one of claims 1 to 3, **characterized in that** the fibers are in the form of textile layers.

5. The boot as claimed in one of previous claims, **characterized in that** the fibers are of carbon or KEVLAR(R), or glass fibers.

6. The boot as claimed in the preceding claim, **characterized in that** the frame is formed by the combination of a number of textile layers of identical or different fibers.

7. The boot as claimed in claim 5 or 6, **characterized in that** the fibers are superposed or woven.

8. The boot as claimed in one of claims 1 to 7, **characterized in that** the frame (13) is covered by the flexible envelope.

9. The boot as claimed in one of claims 1 to 8, **characterized in that** the frame (13) is not at least partly covered by the flexible envelope (17).

10. The boot as claimed in one of claims 1 to 9, **characterized in that** the rigid core (1) comprises a frame (13) extending transversely under the rigid core, between heel and toe, and obliquely rearward, on each side of the rigid core.

11. The boot as claimed in one of claims 1 to 10, **characterized in that** the rigid core (1) comprises a frame extending above the heel and obliquely toward the bottom and the front of each side of the rigid core.

12. A method for manufacturing a boot according to one of the previous claims, **characterized in that** the reinforced matrix of a frame (13) is formed, **in that** the frame (13) is then arranged in a first mold, **in that** the first material is injected over the reinforcement frame, and then, in a second mold, the second material is over-injected over the assembly obtained from the first mold.

## Patentansprüche

1. Sportschuh für ein Gleitbrett, wie Schi, Snowboard oder Schlittschuh, welcher einerseits ein erstes Teil (1) aus einem ersten verspritzten Kunstharzmateriel und ein zweites Teil (17), das diesem ersten Teil überlagert ist und aus einem zweiten verspritzten Kunstharzmaterial besteht, und andererseits Verstärkungsmittel (10, 11, 12, 13) aufweist, **dadurch gekennzeichnet, dass** die Verstärkungsmittel wenigstens teilweise aus wenigstens einer Armierung (13) bestehen, die eine mit Mineral- oder Synthesefasern verstärkte thermoplastische oder duroplastische Matrix aus einem Kunstharz aufweist, und wenigstens teilweise zwischen den erwähnten Teilen angeordnet sind.

2. Schuh nach Anspruch 1, **dadurch gekennzeichnet, dass** das erste Teil ein steifer Kern (1) ist, welcher einerseits Verstärkungsmittel aufweist und in bestimmten Bereichen die Innenseite des Schuhs bildet, der einen Komfortinnenschuh aufnimmt, und das zweite Teil eine Hülle aus biegsamem Material (17) ist, welche wenigstens teilweise den steifen Kern (1) bedeckt und ihrerseits die Innenseite des Schuhs in denjenigen Bereichen bildet, wo der steife Kern nicht vorhanden ist.

3. Schuh nach Anspruch 1 oder 2, **dadurch gekennzeichnet, dass** das Kunstharz der Armierung wärmeformbar ist.

4. Schuh nach einem der Ansprüche 1 bis 3, **dadurch gekennzeichnet, dass** die Fasern die Form von Textilstreifen haben.

5. Schuh nach einem der vorangehenden Ansprüche, **dadurch gekennzeichnet, dass** die Fasern Kohlenstofffasern oder Fasern aus KEVLAR (eingetragenes Warenzeichen) oder Glasfasern sind.

6. Schuh nach dem vorangehenden Anspruch, **dadurch gekennzeichnet, dass** die Armierung aus einer Kombination mehrerer Textilstreifen aus identischen oder verschiedenen Fasern besteht.

7. Schuh nach Anspruch 5 oder 6, **dadurch gekennzeichnet, dass** die Fasern überlagert oder gewebt sind.

8. Schuh nach einem der Ansprüche 1 bis 7, **dadurch gekennzeichnet, dass** die Armierung (13) von einer biegsamen Hülle bedeckt ist.

9. Schuh nach einem der Ansprüche 1 bis 8, **dadurch gekennzeichnet, dass** die Armierung (13) nicht wenigstens teilweise von der biegsamen Hülle bedeckt ist.

10. Schuh nach einem der Ansprüche 1 bis 9, **dadurch gekennzeichnet, dass** der steife Kern (1) eine Armierung (13) hat, die sich quer unter diesem steifen Kern zwischen Ferse und Fuss sowie beiderseits des steifen Kerns schräg nach hinten erstreckt.

11. Schuh nach einem der Ansprüche 1 bis 10, **dadurch gekennzeichnet, dass** der steife Kern (1) eine Armierung hat, die sich über der Ferse und beiderseits dieses steifen Kerns schräg nach unten und vorn erstreckt.

12. Verfahren zur Herstellung eines Schuhs nach einem der vorangehenden Ansprüche, **dadurch gekennzeichnet, dass** die verstärkte Matrix einer Armierung (13) geformt wird, dass dann diese Armierung (13) in eine erste Spritzform gelegt wird, dass anschliessend das erste Material auf die Armierung (13) gespritzt wird und dass schliesslich in einer zweiten Spritzform das aus der ersten Spritzform erhaltene Gussstück mit dem zweiten Material überspritzt wird.
